# EUROPÄISCHE PATENTSCHRIFT

(11) **EP 3 420 251 B1**
(45) Veröffentlichungstag und Bekanntmachung des Hinweises auf die Patenterteilung: **02.07.2025**
(21) Anmeldenummer: 17703349.5
(22) Anmeldetag: 26.01.2017
(51) Int. Cl.: F16H 57/04

(54) **KORROSIONSSCHUTZMITTELBEHÄLTER II**
CORROSION INHIBITOR CONTAINER II
CONTENANT À AGENT ANTICORROSION II

(30) Priorität: 22.02.2016 DE 102016202665
(43) Veröffentlichungstag der Anmeldung: 02.01.2019
(73) Patentinhaber: ZF Friedrichshafen AG, 88046 Friedrichshafen (DE); ZF Wind Power Antwerpen NV, 3920 Lommel (BE)
(72) Erfinder: BEQUÉ, Rik, 8750 Wingene (BE); ROTTIERS, Stijn, 9160 Lokeren (BE); MAES, Andy, 9112 Sinaa (BE); KRIECKEMANS, Koen, 2200 Noorderwijk (BE)
(74) Vertreter: ZF Friedrichshafen AG
(86) Internationale Anmeldenummer: PCT/EP2017/051617
(87) Internationale Veröffentlichungsnummer: WO 2017/144224

(56) Entgegenhaltungen:
- DE-A1- 102013 226 526
- US-A- 2 335 901
- US-A- 2 407 023
- US-A- 2 451 523
- US-A- 2 511 726

## Beschreibung

Die Erfindung betrifft einen Korrosionsschutzbehälter nach dem Oberbegriff von Anspruch 1 und ein Verfahren zum Zusammenbau einer Windkraftanlage, deren Getriebe mit einem solchen Korrosionsschutzbehälter versehen ist.

Die Druckschriften US 2,511,726 A, US 2,407,023 A und US 2,335,901 offenbaren Korrosionsschutzmittelbehälter, die sich mittels eines Außengewindes in ein entsprechendes Innengewinde eines Getriebegehäuses einschrauben lassen. Die Korrosionsschutzmittelbehälter geben ein Korrosionsschutzmittel in das Innere des Getriebegehäuses ab. Hierdurch wird verhindert, dass sich in dem Getriebegehäuse Korrosion bildet.

Ist ein Getriebe bei Auslieferung mit einem Korrosionsschutzmittelbehälter versehen, ist dieser vor Inbetriebnahme zu entfernen. Das Innengewinde, in das der Korrosionsschutzmittelbehälter eingeschraubt war, muss anschließend mit einer Verschlussschraube verschlossen werden. Im Einzelfall kann es aber passieren, dass etwa aufgrund von Nachlässigkeiten keine geeignete Verschlussschraube zur Verfügung steht. Die Inbetriebnahme des Getriebes verzögert sich infolge dessen.

Der Erfindung liegt die Aufgabe zugrunde, einen Korrosionsschutzmittelbehälter verfügbar zu machen, der die dem Stand der Technik innewohnenden Nachteile nicht aufweist. Insbesondere sollen die oben beschriebenen Verzögerungen der Inbetriebnahme eines Getriebes vermieden werden.

Diese Aufgabe wird gelöst durch einen Korrosionsschutzmittelbehälter nach Anspruch 1 und ein Verfahren nach Anspruch 8.

Der Korrosionsschutzmittelbehälter, d.h. Behälter zur Aufnahme eines Korrosionsschutzmittels, weist mindestens eine Kammer auf. Unter der Kammer ist ein mindestens teilweise von dem Korrosionsschutzmittelbehälter umschlossener Hohlraum zu verstehen.

Die Kammer dient der Aufnahme eines Korrosionsschutzmittels.

Korrosionsschutzmittel bezeichnet ein Mittel, dass Gase zum Korrosionsschutz, d.h. Gase, die korrosionshemmend wirken, freisetzt und/oder ein feuchtigkeitsabsorbierendes Mittel, etwa Silicatgel.

Der Korrosionsschutzmittelbehälter weist darüber hinaus mindestens eine gasdurchlässige bzw. permeable Wandung auf. Insbesondere ist die Wandung durchlässig für die freigesetzten korrosionshemmenden Gase und/oder für Feuchtigkeit. Vorzugsweise ist die Wand perforiert, d.h. weist mehrere durchgehende Löcher auf.

Der Korrosionsschutzmittelbehälter ist zudem mit mindestens einem Außengewinde versehen, mit dem der Korrosionsschutzmittelbehälter in ein Kernloch, d.h. in eine Bohrung mit Innengewinde, eines Getriebegehäuses eingeschraubt werden kann. Das Kernloch ist vorzugsweise als durchgehendes Loch ausgeführt. Bei dem Kernloch handelt es sich etwa um eine Öleinfüll- und Ablassöffnung oder eine Inspektionsöffnung.

Bevorzugt wird der Korrosionsschutzmittelbehälter von außen in das Kernloch eingeschraubt. Vor dem Einschrauben befindet sich der Korrosionsschutzmittelbehälter also außerhalb des Getriebegehäuses bzw. in einer Umgebung des Getriebegehäuses. Von dort ausgehend wird beim Einschrauben des Korrosionsschutzmittelbehälters in das Kernloch mindestens ein Teil des Korrosionsschutzmittelbehälters, der die Wandung umfasst, durch das Kernloch hindurch in ein Inneres des Getriebegehäuses eingeführt.

Bei dem Inneren des Getriebegehäuses handelt es sich um einen Hohlraum innerhalb des Getriebegehäuses, den das Getriebegehäuse mindestens teilweise umgibt. Das Getriebegehäuse kapselt den Hohlraum gegenüber einem Bereich außerhalb des Getriebegehäuses bzw. gegenüber der Umgebung des Getriebegehäuses.

Der Korrosionsschutzmittelbehälter ist so ausgeführt, dass die Wandung sich die Wandung im Inneren des Getriebegehäuses befindet und die Kammer von dem Inneren trennt, wenn der Korrosionsschutzmittelbehälter in das Kernloch eingeschraubt ist. Aufgrund der Permeabilität der Wandung können Korrosionsschutzmittel bzw. die freigesetzten Gase von der Kammer ins Innere des Getriebegehäuses und/oder Feuchtigkeit aus dem Inneren in die Kammer gelangen.

Neben dem Außengewinde weist der Korrosionsschutzmittelbehälter erfindungsgemäß mindestens ein Innengewinde auf. In selbiges ist eine Verschlussschraube einschraubbar. Dieselbe Verschlussschraube ist in das Kernloch einschraubbar, wenn der Korrosionsschutzmittelbehälter nicht in das Kernloch eingeschraubt ist. Dies impliziert, dass die Verschlussschraube ein Außengewinde aufweist, welches dem Außengewinde des Korrosionsschutzmittelbehälters gleicht.

Das Innengewinde des Korrosionsschutzmittelbehälters ermöglicht es, die Verschlussschraube verliersicher mitzuliefern. Wird der Korrosionsschutzmittelbehälter vor Inbetriebnahme des Getriebes entfernt, ist gewährleistet, dass die Verschlussschraube vorhanden ist und anstelle des Korrosionsschutzmittelbehälters in das Kernloch eingeschraubt werden kann.

In einer bevorzugten Weiterbildung dient die Verschlussschraube dazu, die Kammer zu verschließen. Wenn also die Verschlussschraube in das Innengewinde des Korrosionsschutzmittelbehälters eingeschraubt ist, wird die Kammer durch die Verschlussschraube verschlossen. Dies impliziert, dass die Kammer durch das Innengewinde hindurch zugänglich ist, wenn die Verschlussschraube nicht eingeschraubt ist. Insbesondere lässt sich die Kammer dann durch das Innengewinde hindurch mit dem Korrosionsschutzmittel befüllen.

Der Korrosionsschutzmittelbehälter hat darüber hinaus bevorzugt eine rotationssymmetrische Grundform. Dies bedeutet, dass der Korrosionsschutzmittelbehälter mindestens teilweise rotationssymmetrisch ist. Ein Teil des Korrosionsschutzmittelbehälters ist also rotationssymmetrisch. Darüber hinaus kann der Korrosionsschutzmittelbehälter Teile aufweisen, etwa Gewindefurchen oder Aussparungen, die nicht rotationssymmetrisch sind. Die Gewindeachsen des Innengewindes und des Außengewindes des Korrosionsschutzmittelbehälters stimmen dabei vorzugsweise mit einer Symmetrieachse der rotationssymmetrischen Grundform überein.

In einer darüber hinaus bevorzugten Weiterbildung besteht der Korrosionsschutzmittelbehälter aus einem ersten Teil, einem zweiten Teil und einem dritten Teil. Der erste Teil weist die Wandung auf, der zweite Teil das Außengewinde und der dritte Teil das Innengewinde. Dabei ist der zweite Teil zwischen dem ersten Teil und dem dritten Teil angeordnet. Dies impliziert, dass der erste Teil sich mindestens teilweise im Inneren des Getriebegehäuses befindet, der zweite Teil mindestens teilweise in dem Kernloch und der dritte Teil mindestens teilweise außerhalb des Getriebegehäuses bzw. in der Umgebung des Getriebegehäuses, wenn der Korrosionsschutzmittelbehälter mit seinem Außengewinde in das Kernloch des Getriebegehäuses eingeschraubt ist.

Vorzugsweise grenzt der zweite Teil an dem ersten Teil und an dem dritten Teil an, nicht jedoch der erste Teil an den dritten Teil.

In einer bevorzugten Weiterbildung gehört der Korrosionsschutzmittelbehälter zu einem Windkraftgetriebe mit einem Getriebegehäuse, dass ein Kernloch aufweist, in welches der Korrosionsschutzmittelbehälter eingeschraubt ist.

In das Innengewinde des Korrosionsschutzmittelbehälters ist vorzugsweise eine Verschlussschraube eingeschraubt. Daraus folgt, dass die Verschlussschraube auch in das Kernloch einschraubbar ist.

Der oben beschriebene Korrosionsschutzmittelbehälter ermöglicht ein erfindungsgemäßes Verfahren zur Installation bzw. zum Zusammenbau einer Windkraftanlage mit den folgenden Schritten:
- Einbau des oben beschriebenen Windkraftgetriebes in die Windkraftanlage;
- Entfernen des Korrosionsschutzmittelbehälters aus dem Kernloch, in dem der Korrosionsschutzmittelbehälter aus dem Kernloch herausgeschraubt wird;
- Entfernen der Verschlussschraube aus dem Innengewinde durch Herausschrauben; und
- Einschrauben der Verschlussschraube in das Kernloch, nachdem der Korrosionsschutzmittelbehälter aus dem Kernloch und die Verschlussschraube aus dem Innengewinde entfernt wurden.

Die Verfahrensschritte werden vorzugsweise in der angegebenen Reihenfolge ausgeführt. Jegliche davon abweichende Reihenfolge der Ausführung der Verfahrensschritte ist möglich, sofern der Wortlaut der Beschreibung dem nicht widerspricht.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Fig. 1 einen geöffneten Korrosionsschutzmittelbehälter; und
Fig. 2 einen Korrosionsschutzmittelbehälter mit Verschlussschraube.

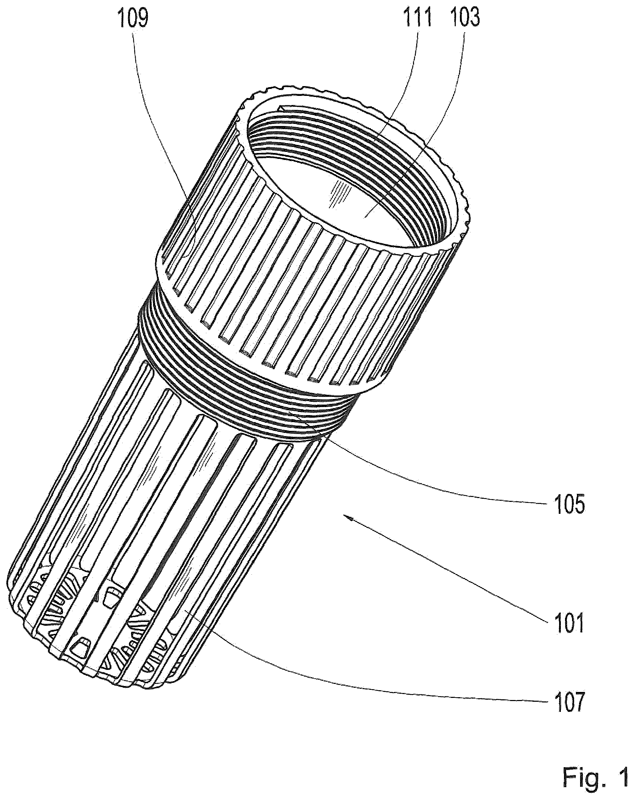

Der Korrosionsschutzmittelbehälter 101 gemäß Figur 1 weist eine Öffnung 103 auf, durch die ein Korrosionsschutzmittel in den Behälter 101 eingebracht werden kann.

Mittels eines Außengewindes 105 kann der Korrosionsschutzmittelbehälter 101 in ein entsprechendes Innengewinde eines Getriebegehäuses eingeschraubt werden. Ein unterer Bereich des Korrosionsschutzmittelbehälters 101 befindet sich dann im Inneren des Getriebegehäuses. In diesem Bereich weist der Korrosionsschutzmittelbehälter 101 Öffnungen 107 auf, durch die Korrosionsschutzmittel in das Innere des Getriebes ausgasen kann.

In seinem oberen Bereich ist der Korrosionsschutzmittelbehälter 101 mit einer Riffelung 109 versehen. Diese erleichtert es, den Korrosionsschutzmittelbehälter 101 in das Getriebegehäuse einzuschrauben.

Weiterhin weist der Korrosionsschutzmittelbehälter 101 in seinem oberen Bereich ein Innengewinde 111 auf. Dieses ragt aus dem Getriebegehäuse heraus, wenn der Korrosionsschutzmittelbehälter in das Getriebegehäuse eingeschraubt ist. Insbesondere bleibt das Innengewinde zugänglich.

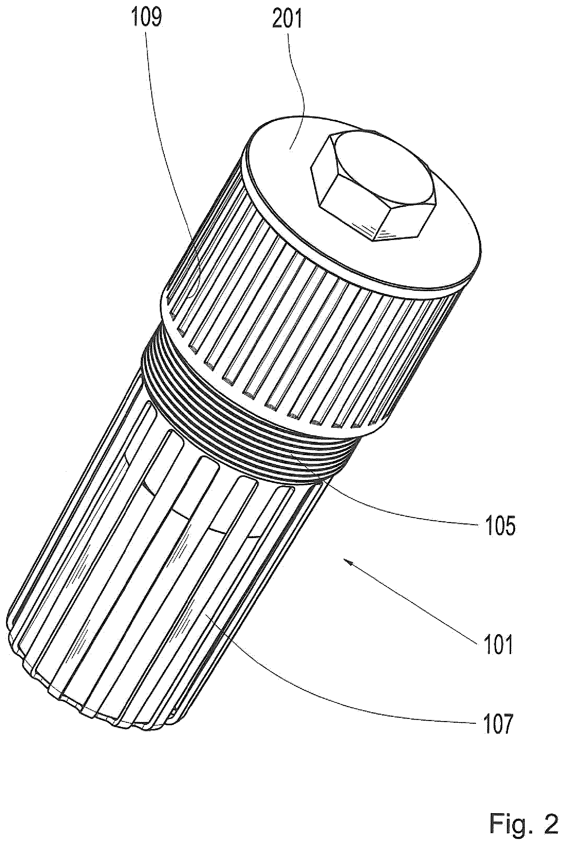

Wie in Fig. 2 dargestellt, dient das Innengewinde 111 dazu, eine Verschlussschraube 201 aufzunehmen. Bei Auslieferung des Getriebes ist zunächst der Korrosionsschutzmittelbehälter 101 in das Getriebegehäuse eingeschraubt. Die Verschlussschraube 201 befindet sich dabei in dem Innengewinde 111 des Korrosionsschutzmittelbehälters 101.

Zur Inbetriebnahme des Getriebes wird der Korrosionsschutzmittelbehälter 101 entfernt. Um die in dem Getriebegehäuse entstandene Öffnung zu verschließen, wird die Verschlussschraube 201 aus dem Korrosionsschutzmittelbehälter 101 entnommen und in das Getriebegehäuse eingeschraubt.

### Bezugszeichen

- 101: Korrosionsschutzmittelbehälter
- 103: Öffnung
- 105: Außengewinde
- 107: Öffnung
- 109: Riffelung
- 111: Innengewinde
- 201: Verschlussschraube

## Patentansprüche

1. Korrosionsschutzmittelbehälter (101) mit mindestens einer Kammer zur Aufnahme eines Korrosionsschutzmittels, mit mindestens einer gasdurchlässigen Wandung und mit mindestens einem Außengewinde (105); wobei
der Korrosionsschutzmittelbehälter (101) ausgebildet ist, mit dem Außengewinde (105) in ein Kernloch eines Getriebegehäuses eingeschraubt zu werden; wobei die Wandung die Kammer von einem Inneren des Getriebegehäuses trennt, wenn der Korrosionsschutzmittelbehälter (101) in das Kernloch eingeschraubt ist; **gekennzeichnet durch**
mindestens ein Innengewinde (111), das ausgebildet ist, eine Verschlussschraube (201) aufzunehmen, die ausgebildet ist, in das Kernloch eingeschraubt zu werden.

2. Korrosionsschutzmittelbehälter (101) nach Anspruch 1; **dadurch gekennzeichnet, dass**
die Kammer durch das Innengewinde (111) hindurch zugänglich ist.

3. Korrosionsschutzmittelbehälter (101) nach einem der vorhergehenden Ansprüche; **dadurch gekennzeichnet, dass**
der Korrosionsschutzmittelbehälter (101) eine rotationssymmetrische Grundform hat.

4. Korrosionsschutzmittelbehälter (101) nach einem der vorhergehenden Ansprüche; **dadurch gekennzeichnet, dass**
der Korrosionsschutzmittelbehälter (101) aus einem ersten Teil, einem zweiten Teil und einem dritten Teil besteht; wobei der erste Teil die Wandung aufweist; wobei
der zweite Teil das Außengewinde (105) und der dritte Teil das Innengewinde (111) aufweist; und wobei
der zweite Teil zwischen dem ersten Teil und dem dritten Teil angeordnet ist.

5. Korrosionsschutzmittelbehälter (101) nach dem vorhergehenden Anspruch;
**dadurch gekennzeichnet, dass**
der zweite Teil an den ersten Teil und an den dritten Teil angrenzt.

6. Windkraftgetriebe mit einem Getriebegehäuse; **gekennzeichnet durch**
einen Korrosionsschutzmittelbehälter (101) nach einem der vorhergehenden Ansprüche; wobei das Getriebegehäuse ein Kernloch aufweist; und wobei der Korrosionsschutzmittelbehälter (101) in das Kernloch eingeschraubt ist.

7. Windkraftgetriebe nach dem vorhergehenden Anspruch; **dadurch gekennzeichnet, dass**
eine Verschlussschraube (201) in das Innengewinde (111) des Korrosionsschutzmittelbehälters (101) eingeschraubt ist.

8. Verfahren zum Zusammenbau einer Windkraftanlage mit den folgenden Schritten:
- Einbau eines Windkraftgetriebes nach dem vorhergehenden Anspruch;
- Entfernen des Korrosionsschutzmittelbehälters (101) aus dem Kernloch;
- Entfernen der Verschlussschraube (201) aus dem Innengewinde (111); und
- Einschrauben der Verschlussschraube (201) in das Kernloch.

## Claims

1. Corrosion-inhibitor container (101) having at least one chamber for receiving a corrosion inhibitor, having at least one gas-permeable wall and having at least one external thread (105); wherein
the corrosion-inhibitor container (101) is configured to be screwed into a core hole of a transmission housing by way of the external thread (105); wherein the wall separates the chamber from an interior of the transmission housing when the corrosion-inhibitor container (101) has been screwed into the core hole; **characterized by**
at least one internal thread (111) which is configured to receive a closure screw (201) which is configured to be screwed into the core hole.

2. Corrosion-inhibitor container (101) according to Claim 1; **characterized in that**
the chamber is accessible through the internal thread (111).

3. Corrosion-inhibitor container (101) according to either of the preceding claims; **characterized in that**
the corrosion-inhibitor container (101) has a rotationally symmetrical basic shape.

4. Corrosion-inhibitor container (101) according to one of the preceding claims; **characterized in that**
the corrosion-inhibitor container (101) consists of a first part, a second part and a third part; wherein the first part has the wall; wherein
the second part has the external thread (105) and the third part has the internal thread (111); and wherein
the second part is arranged between the first part and the third part.

5. Corrosion-inhibitor container (101) according to the preceding claim; **characterized in that**
the second part is adjacent to the first part and to the third part.

6. Wind-turbine transmission having a transmission housing; **characterized by**
a corrosion-inhibitor container (101) according to one of the preceding claims; wherein the transmission housing has a core hole; and wherein the corrosion-inhibitor container (101) is screwed into the core hole.

7. Wind-turbine transmission according to the preceding claim; **characterized in that**
a closure screw (201) is screwed into the internal thread (111) of the corrosion-inhibitor container (101).

8. Method for assembling a wind turbine, comprising the following steps:
- installing a wind-turbine transmission according to the preceding claim;
- removing the corrosion-inhibitor container (101) from the core hole;
- removing the closure screw (201) from the internal thread (111); and
- screwing the closure screw (201) into the core hole.

## Revendications

1. Réservoir d'agent anticorrosion (101) avec au moins une chambre destinée à recevoir un agent anticorrosion, avec au moins une paroi perméable aux gaz et avec au moins un filetage extérieur (105) ;
le réservoir d'agent anticorrosion (101) étant réalisé pour être vissé avec le filetage extérieur (105) dans un trou central d'un boîtier de transmission ; la paroi séparant la chambre d'un intérieur du boîtier de transmission lorsque le réservoir d'agent anticorrosion (101) est vissé dans le trou central ; **caractérisé par**
au moins un filetage intérieur (111) réalisé pour recevoir une vis de fermeture (201) réalisée pour être vissée dans le trou central.

2. Réservoir d'agent anticorrosion (101) selon la revendication 1 ; **caractérisé en ce que**
la chambre est accessible à travers le filetage intérieur (111).

3. Réservoir d'agent anticorrosion (101) selon l'une quelconque des revendications précédentes ; **caractérisé en ce que**
le réservoir d'agent anticorrosion (101) a une forme de base à symétrie de révolution.

4. Réservoir d'agent anticorrosion (101) selon l'une quelconque des revendications précédentes ; **caractérisé en ce que**
le réservoir d'agent anticorrosion (101) est constitué d'une première partie, d'une deuxième partie et d'une troisième partie ; la première partie présentant la paroi ;
la deuxième partie présentant le filetage extérieur (105) et la troisième partie présentant le filetage intérieur (111) ; et
la deuxième partie étant agencé entre la première partie et la troisième partie.

5. Réservoir d'agent anticorrosion (101) selon la revendication précédente ; **caractérisé en ce que**
la deuxième partie est adjacente à la première partie et à la troisième partie.

6. Transmission d'éolienne avec un boîtier de transmission ; **caractérisée par**
un réservoir d'agent anticorrosion (101) selon l'une quelconque des revendications précédentes ; le boîtier de transmission présentant un trou central ; et le réservoir d'agent anticorrosion (101) étant vissé dans le trou central.

7. Transmission d'éolienne selon la revendication précédente ; **caractérisée en ce que**
une vis de fermeture (201) est vissée dans le filetage intérieur (111) du réservoir d'agent anticorrosion (101).

8. Procédé d'assemblage d'une éolienne avec les étapes suivantes :
- l'installation d'une transmission d'éolienne selon la revendication précédente ;
- le retrait du réservoir d'agent anticorrosion (101) du trou central ;
- le retrait de la vis de fermeture (201) du filetage intérieur (111) ; et
- le vissage de la vis de fermeture (201) dans le trou central.
